# EUROPEAN PATENT APPLICATION

(11) **EP 4 019 328 A1**
(43) Date of publication of application: **29.06.2022**
(21) Application number: 20853672.2
(22) Date of filing: 20.08.2020
(51) Int. Cl.: B60Q 1/14, F21V 29/503, F21V 29/74, F21V 29/89, F21Y 115/10, F21S 41/147, F21S 41/148, F21S 41/151, F21S 41/663, F21S 45/48, F21W 102/14, F21W 102/155, F21W 102/165, F21W 102/20

(54) **VEHICLE LIGHTING TOOL**

(30) Priority: 21.08.2019 JP 2019150859
(71) Applicant: Ichikoh Industries, Ltd., Isehara-shi, Kanagawa 259-1192 (JP)
(72) Inventor: INOUE, Katsuhiko, Isehara-shi, Kanagawa 259-1192 (JP); SUZUKI, Eiji, Isehara-shi, Kanagawa 259-1192 (JP)
(74) Representative: Reeve, Nicholas Edward
(86) International application number: PCT/JP2020/031468
(87) International publication number: WO 2021/033748

(57) **Abstract**

In a vehicular lamp, power consumption during the realization of high beams is efficiently reduced so as to downsize a heat radiating member. Disclosed is a vehicular lamp including a plurality of first light sources for low beams, a plurality of second light sources for high beams, a heat radiating member thermally connected to the plurality of first light sources and the plurality of second light sources, and a control device configured to control the plurality of first light sources and the plurality of second light sources, and the control device turns on all of the plurality of first light sources during realization of low beams and, during realization of high beams, turns on all of the plurality of second light sources and turns on some or all of the plurality of first light sources in a state where a lower electric power is consumed as compared with electric power consumed by the plurality of first light sources during the realization of low beams.

## Description

### TECHNICAL FIELD

The present invention relates to a vehicular lamp.

### BACKGROUND ART

Patent Literature 1 discloses the vehicular illumination lamp, in which a first light source unit and a second light source unit are arranged behind a projection lens.

### CITATION LIST

### PATENT LITERATURE

PTL 1: JP 2012-226860 A

### SUMMARY OF THE INVENTION

### PROBLEMS TO BE SOLVED BY THE INVENTION

The configuration, which causes not only a light source for a high beam but a light source for a low beam to be turned on when a high beam is to be realized, is advantageous indeed from the viewpoint of visibility, but such configuration makes it difficult to efficiently reduce power consumption during the realization of the high beam. If the power consumption during the realization of the high beam is relatively high, a heat radiating member is hard to downsize.

In one aspect, an object of the present invention is to efficiently reduce power consumption in a vehicular lamp during the realization of high beams so as to downsize a heat radiating member.

### MEANS FOR SOLVING THE PROBLEM

In one aspect, a vehicular lamp is provided that includes a plurality of first light sources for low beams, a plurality of second light sources for high beams, a heat radiating member thermally connected to the plurality of first light sources and the plurality of second light sources, and a control device configured to control the plurality of first light sources and the plurality of second light sources, and the control device turns on all of the plurality of first light sources during realization of low beams and, during realization of high beams, turns on all of the plurality of second light sources and turns on some or all of the plurality of first light sources in a state where a lower electric power is consumed as compared with electric power consumed by the plurality of first light sources during the realization of low beams.

### EFFECT OF THE INVENTION

In one aspect, in a vehicular lamp according to the present invention, it is possible to efficiently reduce power consumption during the realization of high beams so as to downsize a heat radiating member.

### BRIEF DESCRIPTION OF THE DRAWINGS

[FIG. 1] FIG. 1 is a plan view of a vehicle provided with a vehicular lamp according to an embodiment of the present invention.
[FIG. 2] FIG. 2 is a diagram for explaining a positional relationship among components of a lamp unit in an embodiment.
[FIG. 3] FIG. 3 is a schematic diagram illustrating a configuration on a substrate.
[FIG. 4] FIG. 4 is a system chart schematically illustrating a control system for light sources of the lamp unit.
[FIG. 5] FIG. 5 is a diagram illustrating an example of a light distribution pattern realized with low beams.
[FIG. 6] FIG. 6 is a diagram for explaining an example of an equalization method.
[FIG. 7] FIG. 7 is a diagram illustrating an example of a light distribution pattern of high beams realized in a lighting state illustrated in FIG. 6.
[FIG. 8] FIG. 8 is a diagram illustrating a light distribution pattern that is realized solely by second light sources during realization of high beams.
[FIG. 9] FIG. 9 is a diagram for explaining an example of the equalization method.
[FIG. 10] FIG. 10 is a diagram illustrating an example of a light distribution pattern of high beams realized in a lighting state illustrated in FIG. 9.
[FIG. 11] FIG. 11 is a diagram for explaining an example of the equalization method.
[FIG. 12] FIG. 12 is a diagram illustrating an example of a light distribution pattern of high beams realized in a lighting state illustrated in FIG. 11.
[FIG. 13] FIG. 13 is a diagram illustrating a substrate with an opening.
[FIG. 14] FIG. 14 is a diagram illustrating a lamp unit in another embodiment.

### MODE FOR CARRYING OUT THE INVENTION

In the following, a detailed description is made on embodiments with reference to the accompanying drawings. In the accompanying drawings, parts that are two or more in number and have identical attributes may only partially be given a reference sign for easiness of seeing. In the following, unless otherwise specified, "forward" and "backward" mean "in an advancing direction" of a vehicle and "in a backing direction" of a vehicle, respectively, and "up", "down", "left", and "right" each refer to a direction for a driver in a vehicle. It is also conceivable that "up" and "down" are "up" and "down" in a vertical direction and "left" and "right" are "left" and "right" in a horizontal direction. A vehicular outside refers to an outer side in a left and right direction of the vehicle with respect to a longitudinal axis of the vehicle that passes through a center in the left and right direction of the vehicle, and a vehicular inside refers to a side in the left and right direction of the vehicle that is closer to the longitudinal axis.

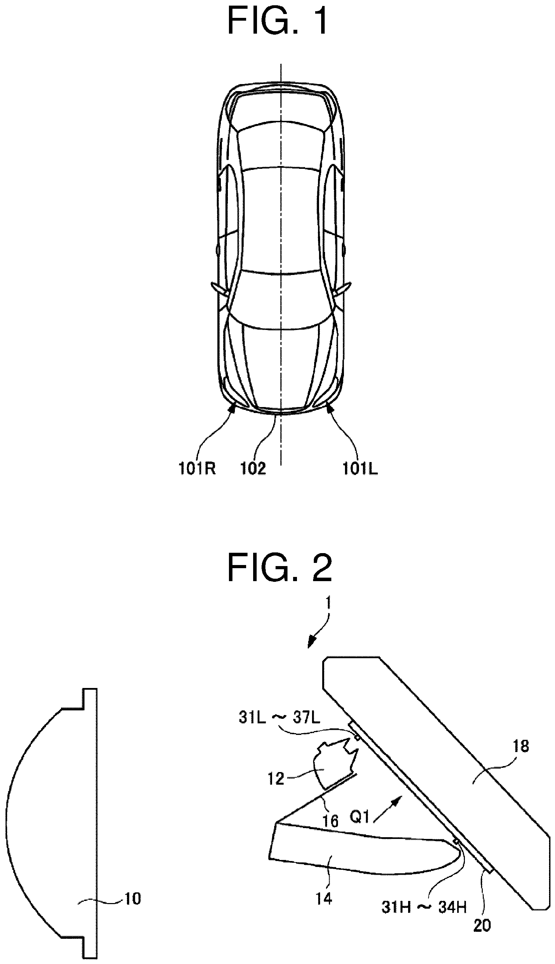

FIG. 1 is a plan view of a vehicle 102 provided with a vehicular lamp (vehicular headlight) according to an embodiment.

As illustrated in FIG. 1, the vehicular lamp of the present embodiment constitutes each of vehicular headlights (101L and 101R) that are provided left and right in a front portion of the vehicle 102 respectively, and is hereinafter referred to simply as the vehicular lamp.

The vehicular lamp of the present embodiment includes a housing (not illustrated) that opens ahead of the vehicle and an outer lens (not illustrated) that is so attached to the housing as to cover an opening, and a lamp unit 1 (see FIG. 2) and the like are arranged in a lamp chamber formed with the housing and the outer lens.

With reference to FIG. 2 and succeeding figures, the lamp unit 1 of the headlight 101R on the right is described below, while the same description may apply to the lamp unit 1 of the headlight 101L on the left unless particularly mentioned. For instance, the lamp unit 1 of the headlight 101L on the left is bilaterally symmetrical in configuration to the lamp unit 1 of the headlight 101R on the right.

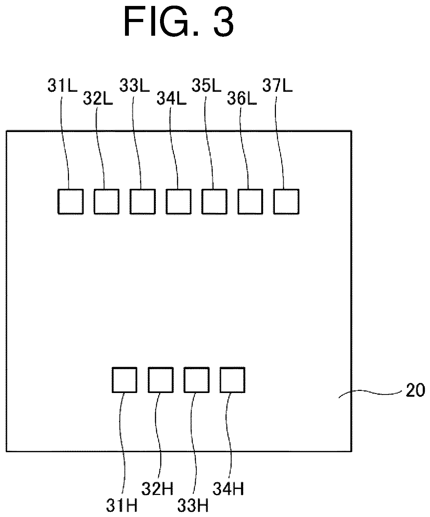

FIG. 2 is a diagram for explaining a positional relationship among components of the lamp unit 1 in an embodiment and schematically illustrates the positional relationship as viewed from a lateral side. FIG. 3 is a schematic diagram illustrating a configuration on a substrate 20 as viewed in a direction of an arrow Q1 in FIG. 2.

The lamp unit 1 includes a projection lens 10, a light guide lens 12 for low beams, a light guide lens 14 for high beams, a shade 16, a heat sink 18, the substrate 20, first light sources 31L through 37L (see FIG. 3) as light sources for low beams, and second light sources 31H through 34H (see FIG. 3) as an ADB (adaptive driving beam) or light sources for high beams.

The projection lens 10 is located on a vehicular front side in the lamp unit 1 and emits light ahead of the vehicle. The projection lens 10 is an aspherical lens, for instance, and may be a projection lens constituted of adjustable surfaces.

The light guide lens 12 for low beams is arranged behind the projection lens 10. The light guide lens 12 for low beams guides light entering from the first light sources 31L through 37L and emits the guided light toward the shade 16 (or the shade 16 and the projection lens 10).

The light guide lens 14 for high beams is arranged behind the projection lens 10. The light guide lens 14 for high beams is arranged lower than the light guide lens 12 for low beams. The light guide lens 14 for high beams guides light entering from the second light sources 31H through 34H and emits the guided light toward the projection lens 10.

The shade 16 reflects light emitted from the light guide lens 12 for low beams and directs the reflected light toward the projection lens 10. During the reflection, part of the light emitted from the lens 12 is blocked by the shade 16. The shade 16 has a function to form a nearly horizontal cutoff line in a light distribution pattern of the lamp unit 1.

The heat sink 18 is formed of a material with a high heat conductivity (copper, for instance) and thermally connected to the first light sources 31L through 37L and the second light sources 31H through 34H. The heat sink 18 has a function to radiate heat generated in the first light sources 31L through 37L and the second light sources 31H through 34H to the outside. The heat sink 18 may have fins (not illustrated).

The first light sources 31L through 37L and the second light sources 31H through 34H are mounted on a surface of the substrate 20. The substrate 20 is arranged so that the surface may direct obliquely downward in the normal direction as viewed from a lateral side. The substrate 20 is thermally connected to the heat sink 18. For instance, the substrate 20 may be connected to the heat sink 18 through an adhesive with a high heat conductivity, a thermal sheet or the like.

In the present embodiment, the substrate 20, on which the first light sources 31L through 37L and the second light sources 31H through 34H are mounted, is a single substrate (namely, a substrate in common). In other words, the first light sources 31L through 37L and the second light sources 31H through 34H are mounted in one and the same plane. Such configuration allows a shared use of the heat sink 18, so that costs are reduced as compared with the case, where a plurality of substrates are used to mount the first light sources 31L through 37L and the second light sources 31H through 34H. In a modification, the first light sources 31L through 37L and the second light sources 31H through 34H may separately be mounted on different substrates. In that case, the different substrates may thermally be connected to the heat sink 18 in common or separate heat sinks.

The first light sources 31L through 37L are each constituted of an LED (light emitting diode), for instance. The first light sources 31L through 37L are arrayed side by side in a vehicular width direction as illustrated in FIG. 3, for instance.

The second light sources 31H through 34H are each constituted of an LED, for instance. The second light sources 31H through 34H may be LEDs with the same characteristics (model number) as those for the first light sources 31L through 37L. The second light sources 31H through 34H are arrayed side by side as illustrated in FIG. 3, for instance.

In an example illustrated in FIG. 3, the first light sources 31L through 37L are seven in number and the second light sources 31H through 34H are four in number, with centers in the left and right direction corresponding to each other. The number of the first light sources 31L through 37L is relatively large, so that a light distribution pattern with a spread in the left and right direction is formed.

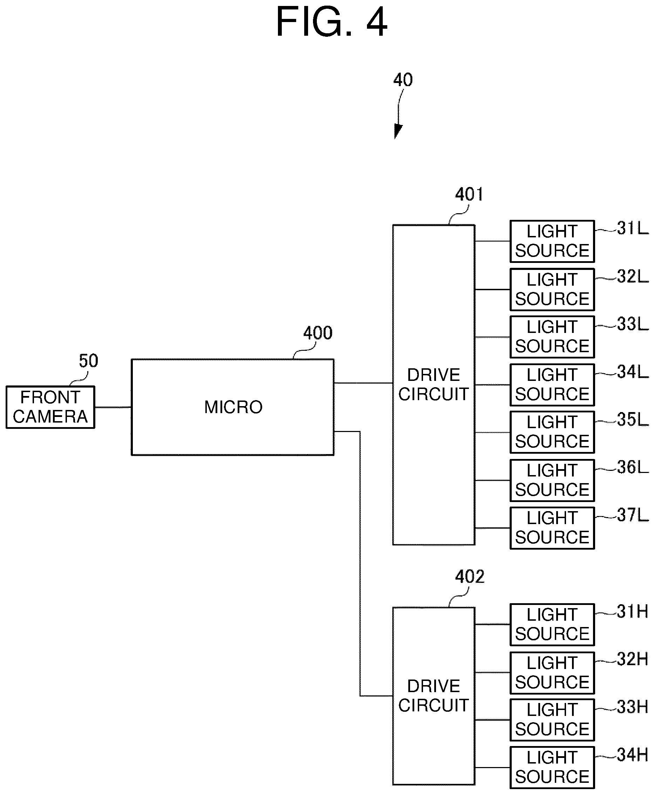

FIG. 4 is a system chart schematically illustrating a control system 40 for the first light sources 31L through 37L and the second light sources 31H through 34H of the lamp unit 1.

The control system 40 is electrically connected to the first light sources 31L through 37L and the second light sources 31H through 34H. The control system 40 in FIG. 4 includes a microcomputer 400 (written as "MICRO" in FIG. 4), a drive circuit 401 for low beams, and a drive circuit 402 for high beams. The drive circuit 401 for low beams (and the drive circuit 402 for high beams as well) may include drive circuits for the respective first light sources 31L through 37L. The microcomputer 400, the drive circuit 401 for low beams, and the drive circuit 402 for high beams may be concretized as an ECU (electronic control unit).

The drive circuit 401 for low beams drives the first light sources 31L through 37L according to a command from the microcomputer 400. Similarly, the drive circuit 402 for high beams drives the second light sources 31H through 34H according to a command from the microcomputer 400. The driving method is a pulse driving method, and the first light sources 31L through 37L and the second light sources 31H through 34H are each controlled in a state where the duty ratio of pulse driving is variable, for instance.

The microcomputer 400 controls the first light sources 31L through 37L and the second light sources 31H through 34H in a plurality of modes.

The modes include a mode for realizing low beams and a mode for realizing high beams.

The mode for realizing high beams may include a normal mode and a special mode for achieving such variable light distribution control as performed on an ADB (adaptive driving beam). In the special mode, the microcomputer 400 controls the second light sources 31H through 34H so that a light distribution pattern giving no glare to a driver of an oncoming vehicle may be realized based on a captured image from a camera 50 for capturing images of a region ahead of the vehicle. If such special mode is included, variable light distribution control is achieved without using any mechanical, movable parts. In a modification, the mode for realizing high beams may not include the special mode.

In the following, unless particularly mentioned, a high beam refers to a high beam in the normal mode.

The microcomputer 400 turns on all the first light sources 31L through 37L during the realization of low beams. In the following, the duty ratio of driving of the first light sources 31L through 37L during the realization of low beams is denoted by "Duty L1" and electric power consumed by the first light sources 31L through 37L during the realization of low beams is referred to as "power consumption WL1". The power consumption WL1 varies with Duty L1. In the present embodiment, it is assumed that Duty L1 is uniform (that is to say, is set to be the maximum value within an available range, for instance) and, accordingly, the power consumption WL1 is also uniform.

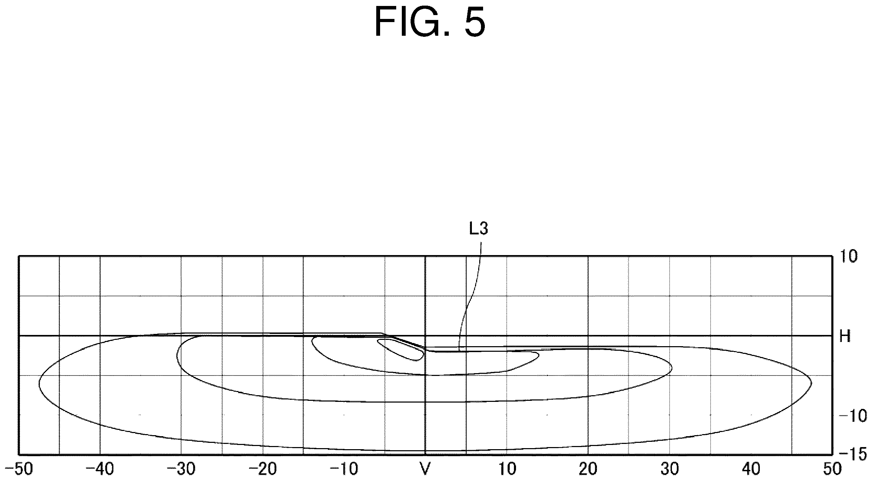

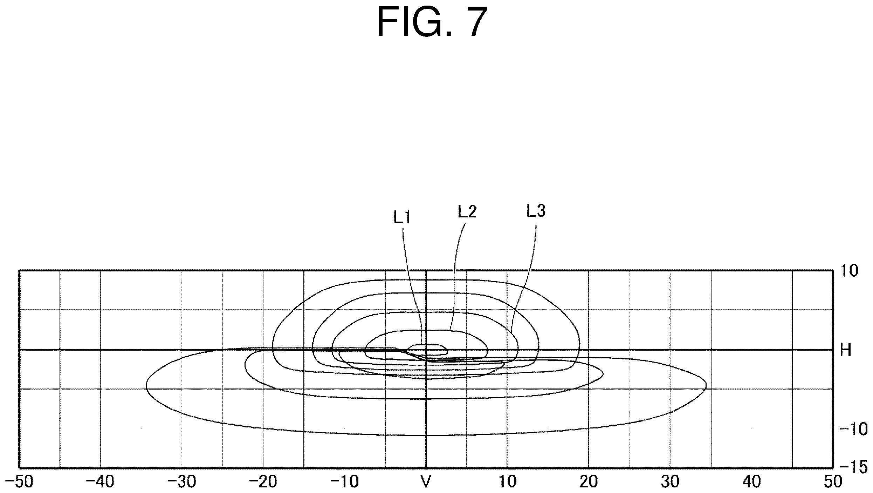

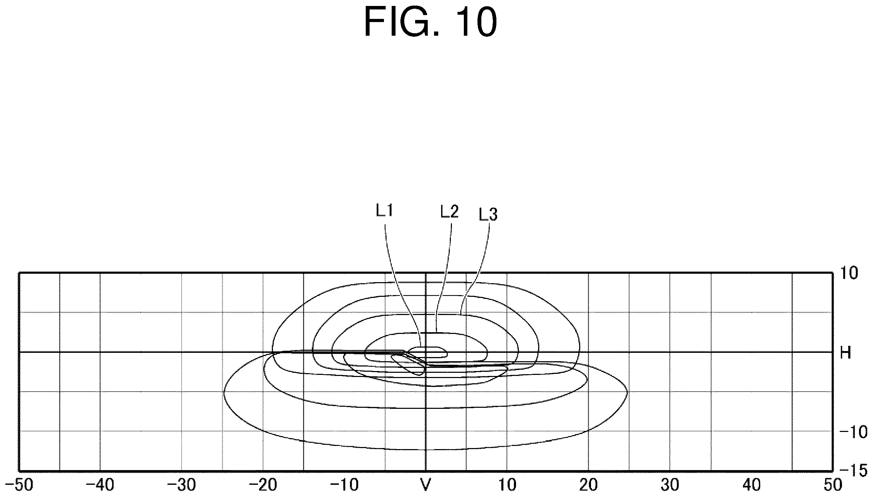

FIG. 5 is a diagram illustrating an example of a light distribution pattern realized with low beams. FIG. 5 illustrates, as a light distribution pattern, an illuminance distribution (cross-sectional illuminance) on a plane (screen) ahead of the vehicle that is perpendicular to an optical axis of the lamp unit 1. In FIG. 5 (and similar figures to be discussed later as well), a line V indicates a vertical reference line (V-V line) on the screen and a line H indicates a horizontal reference line (H-H line) on the screen. In FIG. 5, a contour L3 is a contour surrounding an area with the highest illuminance and indicates an area lower in illuminance than areas indicated by contours L1 and L2 to be discussed later (see FIGS. 7, 10, and the like). In other words, there exists a relation expressed as L1 > L2 > L3 with respect to the illuminance.

In the present embodiment, during the realization of high beams, the microcomputer 400 realizes high beams in a state where power consumption is not significantly increased as compared with the power consumption WL1 as electric power consumed during the realization of low beams.

Specifically, the microcomputer 400 turns on all of the second light sources 31H through 34H. In the following, the duty ratio of driving of the second light sources 31H through 34H during the realization of high beams is denoted by "Duty H2", electric power consumed by the second light sources 31H through 34H during the realization of high beams is referred to as "power consumption WH2", and it is assumed that the power consumption WL1 is higher than the power consumption WH2. The power consumption WH2 varies with Duty H2. In the present embodiment, it is assumed that Duty H2 is uniform (that is to say, is set to be the maximum value within an available range, for instance) and, accordingly, the power consumption WH2 is also uniform. Duty H2 is preferably set so that a luminous flux of 800 [lm] or more may be formed from the second light sources 31H through 34H.

During the realization of high beams, the microcomputer 400 turns on some or all of the first light sources 31L through 37L in a state where a lower electric power is consumed as compared with the power consumption WL1 (the electric power consumed by the first light sources 31L through 37L during the realization of low beams).

In this regard, the duty ratio of driving of the first light sources 31L through 37L during the realization of high beams is denoted by "Duty L2" and electric power consumed by the first light sources 31L through 37L during the realization of low beams is referred to as "power consumption WL2". The power consumption WL2 varies with the number of light sources to be driven among the first light sources 31L through 37L and Duty L2 during the driving.

In the present embodiment, the power consumption WL2 is lower than the power consumption WL1 (the electric power consumed by the first light sources 31L through 37L during the realization of low beams). The electric power consumed by the first light sources 31L through 37L during the realization of high beams is thus reduced, so that electric power consumed in the lamp unit 1 during the realization of high beams is effectively reduced.

Preferably, the power consumption WL2 corresponds to a difference found by subtracting the power consumption WH2 from the power consumption WL1. Such relation is expressed as WL2 = WL1 - WH2. In other words, electric power (= WL2 + WH2) consumed during the realization of high beams is preferably set to be equal to the power consumption WL1 (the electric power consumed by the first light sources 31L through 37L during the realization of low beams). Such setting makes it possible to appropriately radiate heat generated during the realization of high beams through the heat sink 18 without making a heat radiating function of the heat sink 18 excessive as compared with a comparative example where electric power Wh consumed during the realization of high beams is under a condition expressed as Wh = WL1 + WH2 (namely, a configuration causing the first light sources 31L through 37L to be driven at Duty L1 as usual even during the realization of high beams). Therefore, the heat sink 18 is downsized as compared with the comparative example, in which the electric power Wh consumed during the realization of high beams is under the condition expressed as Wh = WL1 + WH2.

In fact, the power consumption WL1 and the like may vary depending on various factors, so that the relation expressed as WL2 = WL1 - WH2 does not need to be strict but is a concept permitting an error of about 10% on a measured value basis, for instance.

Thus according to the present embodiment, in the lamp unit 1, power consumption during the realization of high beams is efficiently reduced and the heat sink 18 is downsized.

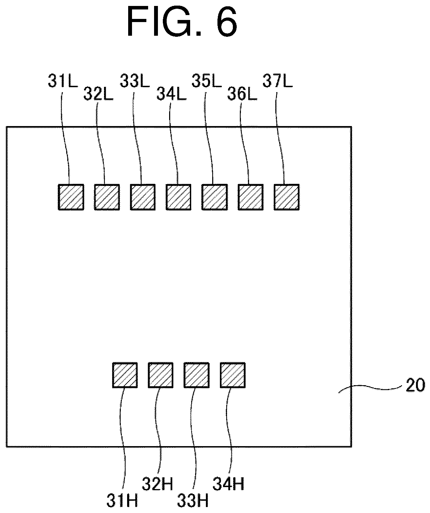

The relation expressed as WL2 = WL1 - WH2 is fulfilled by any method. In other words, any method is usable as long as the method allows the power consumption in the first light sources 31L through 37L during the realization of high beams to be reduced from the power consumption in the first light sources during the realization of low beams. With reference to FIG. 6 and succeeding figures, some preferred examples of the method for fulfilling the relation expressed as WL2 = WL1 - WH2 (hereinafter referred to as "equalization method") are explained below.

FIG. 6 is a diagram for explaining an example of the equalization method, and is a plan view of the first light sources 31L through 37L and the second light sources 31H through 34H on the substrate 20. In FIG. 6, light sources to be turned on among the first light sources 31L through 37L and the second light sources 31H through 34H are hatched. FIG. 7 is a diagram illustrating an example of a light distribution pattern of high beams realized in a lighting state illustrated in FIG. 6.

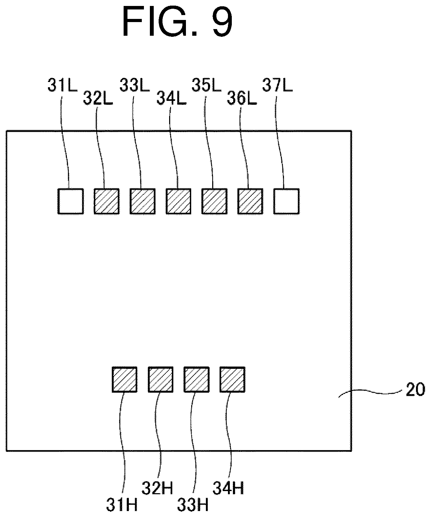

In the example illustrated in FIG. 6, all of the first light sources 31L through 37L are turned on, and Duty L2 of each first light source is set to be lower than Duty L1. Specifically, Duty L2 of the first light sources 31L through 37L is set to be about 40% on Duty L1. As a result, while WL1 is 14.3 × 7 [W], for instance, WL2 is 6.1 × 7 [W] and is thus reduced as much as the power consumption WH2 in the second light sources 31H through 34H. In this example (and examples in FIG. 9 and succeeding figures as well), it is assumed that Duty H2 is equal to Duty L1 and the power consumption WH2 is 14.3 × 4 [W].

According to the example illustrated in FIG. 6, the light distribution pattern of high beams is realized as illustrated in FIG. 7 without considerably reducing a lateral spread as compared with the light distribution pattern realized during the formation of low beams (see FIG. 5).

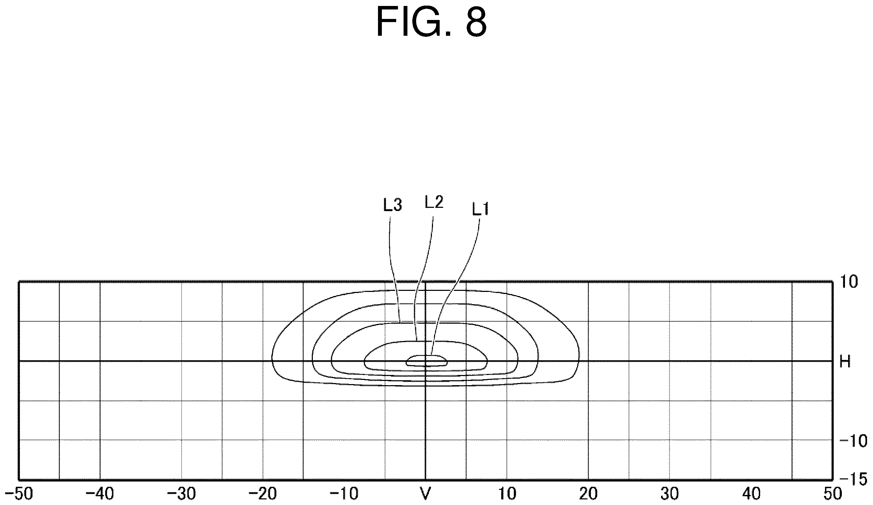

FIG. 8 is a diagram illustrating, for reference, a light distribution pattern that is realized solely by the second light sources 31H through 34H during the realization of high beams. During the realization of high beams, the light distribution pattern realized by the first light sources 31L through 37L is caused to overlap the light distribution pattern illustrated in FIG. 8.

FIG. 9 is a diagram for explaining another example of the equalization method, and is a plan view of the first light sources 31L through 37L and the second light sources 31H through 34H on the substrate 20. In FIG. 9, light sources to be turned on among the first light sources 31L through 37L and the second light sources 31H through 34H are hatched. FIG. 10 is a diagram illustrating an example of a light distribution pattern of high beams realized in a lighting state illustrated in FIG. 9.

In the example illustrated in FIG. 9, among the first light sources 31L through 37L, the first light sources 31L and 37L at both ends are only turned off and the remaining first light sources 32L through 36L are turned on. In other words, Duty L2 of the first light sources 31L and 37L is set to be 0%. Duty L2 of the first light sources 32L through 36L is set to be about 60% on Duty L1. As a result, while WL1 is 7 × 14.3 [W], for instance, WL2 is 5 × 8.6 [W] and is thus reduced as much as the power consumption WH2 in the second light sources 31H through 34H.

According to the example illustrated in FIG. 9, a light distribution pattern of high beams is realized as illustrated in FIG. 10 that is reduced in lateral spread indeed as compared with the light distribution pattern realized during the formation of low beams (see FIG. 5), but is excellent in brightness in a central portion.

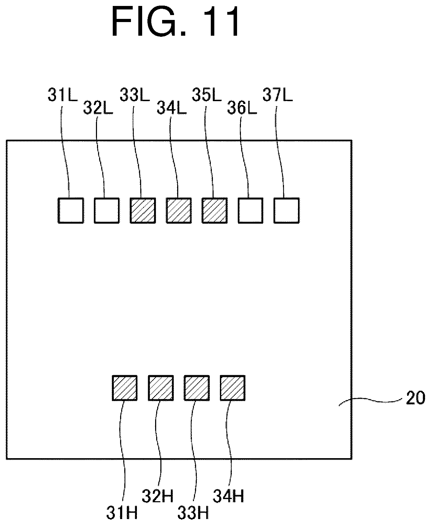

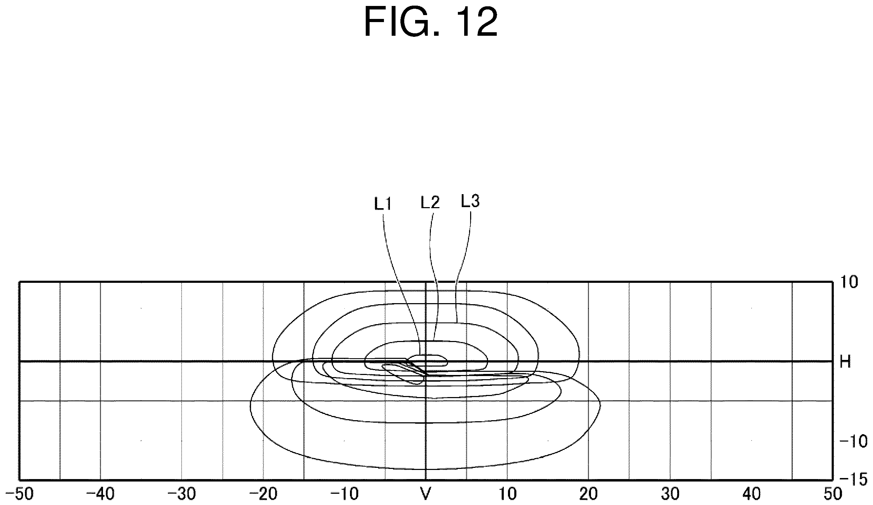

FIG. 11 is a diagram for explaining yet another example of the equalization method, and is a plan view of the first light sources 31L through 37L and the second light sources 31H through 34H on the substrate 20. In FIG. 9, light sources to be turned on among the first light sources 31L through 37L and the second light sources 31H through 34H are hatched. FIG. 12 is a diagram illustrating an example of a light distribution pattern of high beams realized in a lighting state illustrated in FIG, 11.

In the example illustrated in FIG. 11, among the first light sources 31L through 37L, two first light sources at each end, namely, the first light sources 31L, 32L, 36L, and 37L are turned off and the remaining first light sources 33L through 35L are turned on. In other words, Duty L2 of the first light sources 31L, 32L, 36L, and 37L is set to be 0%. Duty L2 of the first light sources 33L through 35L is set to be equal to Duty L1. As a result, while WL1 is 14.3 × 7 [W], for instance, WL2 is 14.3 × 3 [W] and is thus reduced as much as the power consumption WH2 in the second light sources 31H through 34H.

According to the example illustrated in FIG. 11, a light distribution pattern of high beams is realized as illustrated in FIG. 12 that is reduced in lateral spread indeed as compared with the light distribution pattern realized during the formation of low beams (see FIG. 5), but is excellent in brightness in a central portion.

In the example illustrated in FIG. 11, among the first light sources 31L through 37L, two first light sources at each end, namely, the first light sources 31L, 32L, 36L, and 37L are turned off and the remaining first light sources 33L through 35L are turned on, which is not limitative. A different light distribution pattern may be realized by, for instance, turning off the first light sources 32L, 33L, 35L, and 36L and turning on the remaining first light sources 31L, 34L, and 37L among the first light sources 31L through 37L.

The details about the embodiments are as furnished above, while the present invention is not limited to any particular embodiment, and various modifications and alterations can be made within the scope of recitals in the claims. In addition, it is possible to combine all or some of the components in the above embodiments.

For instance, a method for controlling the power consumption in the first light sources 31L through 37L in the normal mode has been explained in practical examples stated above, while it is also possible to control the power consumption in the first light sources 31L through 37L in the special mode for achieving variable light distribution control so that the power consumption may not change according to the state of variable light distribution control. If some of the second light sources 31H through 34H are to be turned off or dimmed, for instance, power consumption in the second light sources 31H through 34H is reduced as compared with the power consumption WH2 in the second light sources 31H through 34H in the normal mode. Consequently, the power consumption in the first light sources 31L through 37L may be so controlled as to increase as compared with the power consumption in the normal mode as much as the reduced power consumption. It is thus possible to secure a good visibility while keeping power consumption in the lamp unit 1 as a whole uniform.

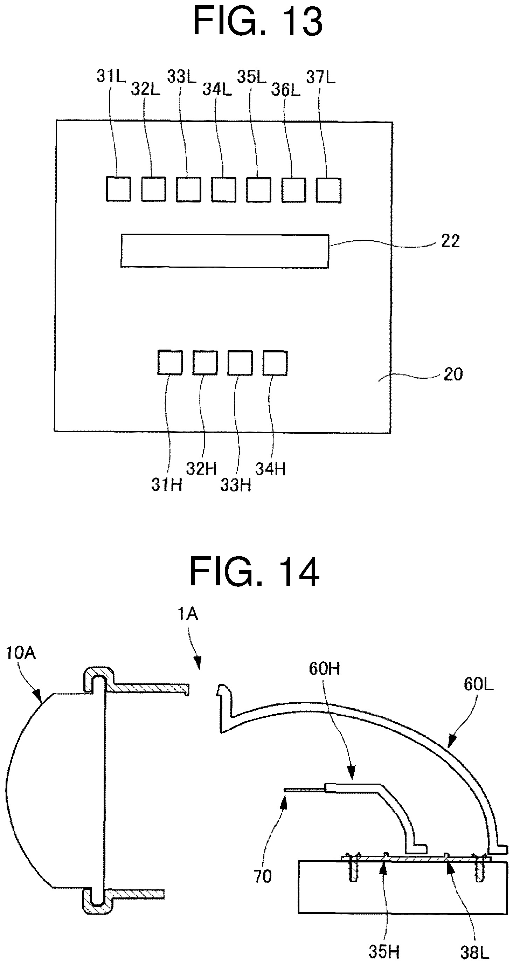

In the above practical examples, no openings are formed in the substrate 20, which is not limitative. For instance, an opening 22 may be formed in the substrate 20, as illustrated in FIG. 13. The opening 22 is arranged between the first light sources 31L through 37L and the second light sources 31H through 34H and is in the shape of a rectangle elongated in the vehicular width direction. The arrangement, the shape, the number, and the like of the opening 22, however, are specified at will. In line with the opening 22 in the substrate 20, an opening (not illustrated) may be formed in the heat sink 18. If the opening 22 is thus provided between the first light sources 31L through 37L and the second light sources 31H through 34H, thermal interference (such as reduction in luminous efficiency of a light source due to heat) by a light source at a higher temperature with a light source at a lower temperature is suppressed when some or all of the first light sources 31L through 37L are turned on simultaneously with the second light sources 31H through 34H. In addition, air is convected between the first light sources 31L through 37L and the second light sources 31H through 34H through the opening 22, which improves heat radiation performance.

In the above practical examples, the lamp unit 1 with a particular configuration as illustrated in FIG. 2 is described as an example, while the configuration of the lamp unit 1 is optional as long as the configuration includes a plurality of light sources (light sources for low beams) such as the first light sources 31L through 37L and a plurality of light sources (light sources for high beams) such as the second light sources 31H through 34H. For instance, a lamp unit 1A illustrated in FIG. 14 is also applicable. The lamp unit 1A illustrated in FIG. 14 includes a plurality of first light sources 38L as light sources for high beams and a plurality of second light sources 35H as light sources for low beams, with a reflector 60L for high beams and a reflector 60H for low beams being provided so as to reflect light emitted from the first light sources and light emitted from the second light sources toward the vicinity of a back focus of a projection lens 10A on the vehicular front side, respectively, and the projection lens 10A emits the reflected light from the reflector 60L for high beams as high beam light distribution and emits, ahead of the vehicle, the reflected light from the reflector 60H for low beams, which light is partially blocked by a shading means 70 provided in the vicinity of the focus, as low beam light distribution. Although one second light source 35H is only illustrated in FIG. 14, the second light sources 35H are two or more in number and are so provided as to align in the vehicular width direction. The same applies to the second light sources 35H.

### DESCRIPTION OF REFERENCE NUMERALS

- 1: lamp unit
- 10: projection lens
- 12: light guide lens for low beams
- 14: light guide lens for high beams
- 16: shade
- 18: heat sink
- 20: substrate
- 31H: second light source
- 31L: first light source
- 32H: second light source
- 32L: first light source
- 33H: second light source
- 33L: first light source
- 34H: second light source
- 34L: first light source
- 35L: first light source
- 35H: second light source
- 36L: first light source
- 37L: first light source
- 38L: first light source
- 40: control system
- 50: camera
- 60L: reflector for high beams
- 60H: reflector for low beams
- 70: shading means
- 101L: headlight
- 101R: headlight
- 102: vehicle
- 400: microcomputer
- 401: drive circuit for low beams
- 402: drive circuit for high beams

## Claims

1. A vehicular lamp comprising:
a plurality of first light sources (31L through 38L) for low beams;
a plurality of second light sources (31H through 35H) for high beams;
a heat radiating member (18) thermally connected to the plurality of first light sources (31L through 38L) and the plurality of second light sources (31H through 35H); and
a control device (40) to control the plurality of first light sources (31L through 38L) and the plurality of second light sources (31H through 35H),
wherein the control device (40) turns on all of the plurality of first light sources (31L through 38L) during realization of low beams and, during realization of high beams, turns on all of the plurality of second light sources (31H through 35H) and turns on some or all of the plurality of first light sources (31L through 38L) in a state where a lower electric power is consumed as compared with electric power consumed by the plurality of first light sources (31L through 38L) during the realization of low beams.

2. The vehicular lamp according to claim 1,
wherein the plurality of first light sources (31L through 38L) and the plurality of second light sources (31H through 35H) are mounted on a substrate (20) in common, and
wherein the plurality of first light sources (31L through 38L) and the plurality of second light sources (31H through 35H) are thermally connected to the heat radiating member (18) through the substrate (20).

3. The vehicular lamp according to claim 1, wherein the control device (40) turns on some or all of the plurality of first light sources (31L through 38L) during the realization of high beams to cause electric power consumed by the plurality of first light sources (31L through 38L) and the plurality of second light sources (31H through 35H) to be equal to the electric power consumed by the plurality of first light sources (31L through 38L) during the realization of low beams.

4. The vehicular lamp according to claim 1,
wherein the plurality of first light sources (31L through 38L) and the plurality of second light sources (31H through 35H) have identical characteristics, and
wherein the plurality of first light sources (31L through 38L) exceed the plurality of second light sources (31H through 35H) in number.

5. The vehicular lamp according to claim 1,
wherein the plurality of first light sources (31L through 38L) are aligned in a lateral direction, and
wherein, during the realization of high beams, the control device (40) turns off a first light source (31L; 32L; 36L; 37L) among the plurality of first light sources (31L through 38L) that is at an end in the lateral direction.
